# EUROPÄISCHE PATENTANMELDUNG

(11) **EP 0 887 467 A2**
(43) Veröffentlichungstag der Anmeldung: **30.12.1998**
(21) Anmeldenummer: 98110306.2
(22) Anmeldetag: 05.06.1998
(51) Int. Cl.: E01D 15/12, F16B 5/00

(54) **Lösbare Kupplung von Brückenträgern mobiler Brücken**

(30) Priorität: 24.06.1997 DE 19726690
(71) Anmelder: DORNIER GmbH, 88039 Friedrichshafen (DE)
(72) Erfinder: Jung, Hans Jürgen, 88682 Salem (DE); Hess, Christopher, 88090 Immenstaad (DE); Hüther, Herbert, 88239 Wangen (DE)
(74) Vertreter: Landsmann, Ralf

(57) **Zusammenfassung**

Kupplung für Längsträger (Spurträger)(1,6) mobiler Brücken mit mechanischer oder formschlüssiger Verriegelung der Längsträger (1,6), wobei in die Kupplung ein Doppel-T-Profil integriert ist, das als Querträger (4,9) die Spurbahnen verbindet.

## Beschreibung

Die Erfindung betrifft eine Verbindung (Kupplung) von Brückenträgern mobiler Brücken. Brücken dieser Art sind in der Internationalen Patentklassifikation (IPC) in E 01 D, 15/12 klassifiziert.

Aufgabe der Erfindung ist es, eine Kupplung zu schaffen, die eine Verbindung von längskraftbeanspruchten und biegebeanspruchten Trägern bei gleichzeitiger Integration eines Querträgers zur parallelen Anordnung von Trägern erlaubt.

Diese Aufgabe wird erfindungsgemäss durch den Gegenstand der Patentansprüche gelöst.

Die erfindungsgemässe Kupplung besteht aus an den Längsträgern montierten Abschlußprofilen mit mechanischer oder formschlüssiger Verriegelung und dem integrierten Querträger. Eine solche Kupplung kann vorzugsweise bei Spurträgerbrücken eingesetzt werden, die wahlweise als Balkenbrücke (Beanspruchung Kräfte und Momente) und als Wannenbrücke (Beanspruchung im wesentlichen nur Kräfte) ausgeführt sind. Die Integration der Querträger in die Kupplungen hat folgende Vorteile:
- das Brückenprofil kann unabhängig von Querträgern gestaltet werden,
- eine Durchdringung der Querträger durch das Brückenprofil, insbesondere bei Brücken mit variabler Breite ist nicht gegeben,
- die Demontage der parallelen Spurträger erfolgt nach Öffnen der Kupplungen automatisch,
- die formschlüssige Verbindung über die gesamte Trägerbreite überträgt die Lasten sehr gleichmässig und vermeidet damit Lastkonzentrationen.

Die Erfindung wird nachfolgend anhand von Fig. näher erläutert. Es zeigen:
- Fig. 1.1: die erfindungsgemässe Variante 1 in gekuppelter Stellung,
- Fig. 1.2: die erfindungsgemässe Variante 1 in Explosionsdarstellung,
- Fig. 2.1: die erfindungsgemässe Variante 2 in geneigter Lage der Längsträger vor dem Einschieben in den Querträger,
- Fig. 2.2: die erfindungsgemässe Variante 2 nach Einschieben der Längsträger in den Querträger,
- Fig. 2.3: die erfindungsgemässe Variante 2 nach Einschieben der Längsträger in den Querträger und Absenken der Querträger vor dem Einschieben der Verriegelungskeile,
- Fig. 2.4: die erfindungsgemässe Variante 2 nach Einschieben der Verriegelungskeile und die Kopplung zweier paralleler Längsträger mit einem Querträger,
- Fig. 2.5: einen Schnitt durch die erfindungsgemässe Variante 2 in geneigter Lage der Längsträger nach dem Einschieben in den Querträger,
- Fig. 2.6: einen Schnitt durch die erfindungsgemässe Variante 2 nach dem Einschieben der Verriegelungskeile.

Diese Aufgabe wird erfindungsgemäss in zwei Varianten gelöst.

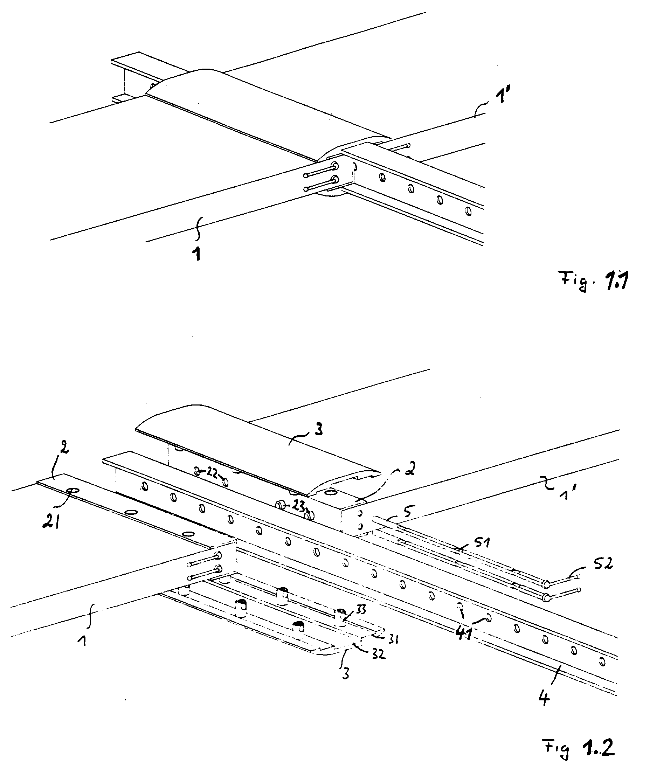

Variante 1 (Fig. 1.2) löst die Aufgabe erfindungsgemäss dadurch, dass
- an jedem Trägerende **1** eine Abschlußprofil **2** montiert ist, das
   (a) die Kräfte aus dem Träger in die Kupplung überleitet,
   (b) einen Kuppelmechanismus enthält, der die beiden Verbindungsprofile **3** gegeneinander verriegelt,
   (c) auf der Kopfseite Nocken **23** und Bohrungen **22** besitzt, die den Querträger **4** im gekuppelten Zustand fixieren,
- ein Querträger **4** als Doppel-T-Profil mit einer Lochreiche **41** im Steg so ausgebildet ist, dass
   a) die Abschlußprofile formschlüssig zwischen die Flansche gesteckt werden können
   b) die Nocken **23** auf den Abschlussprofilen durch die Lochreihe **41** auf dem Steg in die Bohrungen **22** auf den gegenüberliegenden Abschlußprofilen gesteckt werden können
- zwei Verbindungsprofile **3**
   a) mit gefrästen Nuten auf der Innenseite **31** und **32** formschlüssig die Abschlussprofile **2** und den Querträger **4** umschliessen,
   b) mit Verriegelungsnocken **33** in die Bohrungen **21** auf den Abschlussprofilen gesteckt werden und mit der Achse **5** die Verbindungsprofile gegen die Stege der Träger verriegeln,
- in jedem Abschlussprofil zwei Verriegelungsbolzen integriert sind, mit Abflachungen **51**, die
   a) in vertikaler Stellung des Hebels **52** das Einstecken der Nuten der Verriegelungsnocken **33** erlauben und
   b) in horizontaler Stellung des Nebels **52** die Verriegelungsbolzen mit den Verriegelungsnocken **33** formschlüssig verbinden und damit die Profile **3** mit den Abschlußprofilen **2** und dem Querträger **4** verregeln (Fig. 1.1).

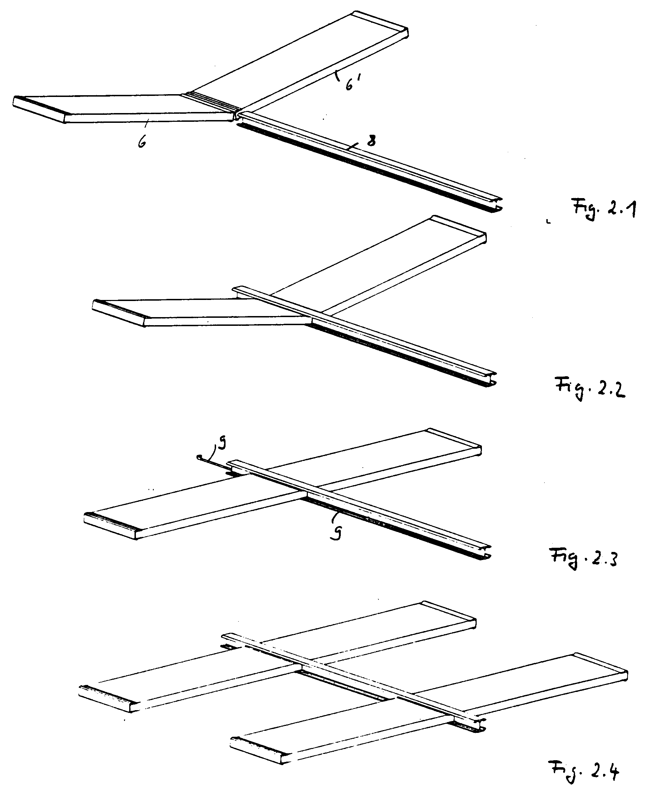

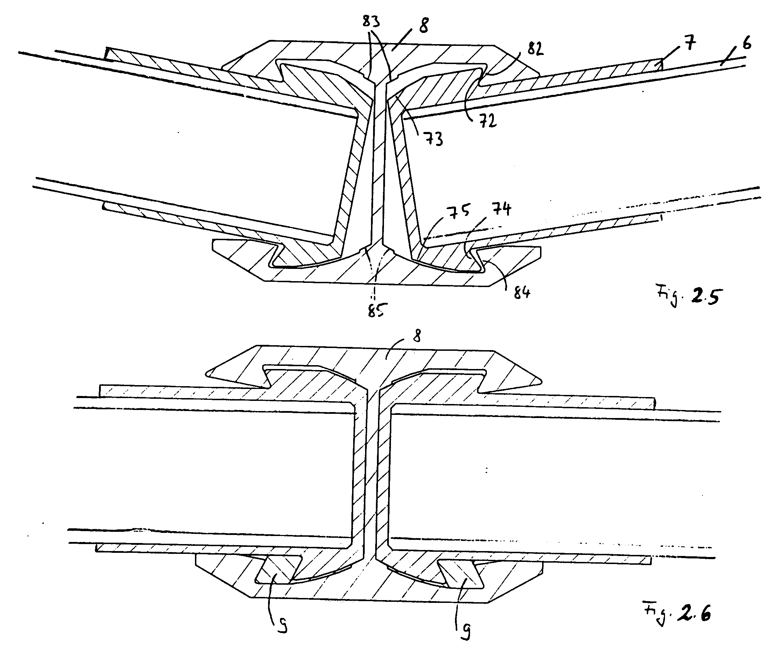

Variante 2 löst die Aufgabe erfindungsgemäss dadurch, dass
- an jedem Trägerende ein Abschlussprofil **7** montiert ist, das
   (a) die Kräfte aus dem Träger **6** direkt über den Quertrager **9** in den Folgeträger **6**° und den Querträger überleitet,
   (b) geometrisch so geformt ist, dass es in angewinkelter Stellung der Träger zum Querträger seitlich in den Querträger eingeschoben werden kann (Fig. 2.1, 2.2 und 2.5),
   (c) an der oberen Abschlusskante eine schräge Nut aufweist **72**, die nach Absenken der Träger in die horizontale Stellung formschlüssig in der Nase **82** des Querträgers liegt (Fig. 2.6),
   d) an der inneren oberen und unteren Abschlusskante eine Anschrägung **73**, **75** aufweist, die formschlüssig in den Anschrägungen **83** und **85** des Querträgers liegen (Fig. 2.6),
   (e) an der unteren Abschlusskante eine schräge und in Querrichtung keilförmige Anschrägung aufweist **74**, die nach Einschieben des Keils **9** die ebenfalls schräge und keilförmige Nut **84** des Querträgers gegen das Abschlussprofil verriegelt (Fig. 2.6),
- ein Querträger **4** als Doppel-T-Profil so ausgebildet ist, das
   (a) die symmetrischen Einfräsungen an den Innenseiten des Flansches das seitliche Einschieben der Längsträger **6** in angewinkelter Stellung gestatten (Fig. 2.1, 2.2 und 2.5),
   (b) die symmetrische Einfräsung an der Innenseite des oberen Flansches mit den geneigten Kontaktflächen **82** und **83** das Abschlussprofil **7** in horizontaler Stellung der Längsträger formschlüssig umschliesst,
   (c) die symmetrische Einfräsung an der Innenseite des unteren Flansches mit der geneigten Kontaktfläche **85** und der in Querrichtung geneigten und keilförmigen Kontaktfläche **84** in Verbindung mit dem Keil **9** die Abschlussprofile gegen den Querträger formschlüssig verriegelt,
   (d) die an der Oberseite angeschrägten Kanten der Flansche eine harmonische Überfahrt von Fahrzeugen gestattet.
- ein Keil **9** als Parallelogrammprofil so ausgebildet ist, dass er nach Einschieben zwischen die Anschrägungen **74** und **84** die Abschlussprofile **7** gegen den Querträger **8** formschlüssig und spielfrei verriegelt (Fig. 2.3 und 2.6).

Nach dem Verriegeln ergibt sich bei beiden Kupplungsvarianten eine Trägerkonfiguration entsprechend Fig. 2.4, wobei der Abstand der Träger zueinander während des Kuppelns frei variiert werden kann.

## Patentansprüche

1. Kupplung für Längsträger (Spurträger) mobiler Brücken mit mechanischer oder formschlüssiger Verriegelung der Längsträger, **dadurch gekennzeichnet**, dass in die Kupplung ein Doppel-T-Profil integriert ist, das als Querträger die Spurbahnen verbindet.

2. Kupplung von Brückenträgern mobiler Brücken mit mechanischer Verriegelung nach Anspruch 1, **dadurch gekennzeichnet**, dass jeder Brückenträger an seiner Stirnseite mehrere Zapfen und den Zapfen gegenüberliegende Bohrungen aufweist, dass in der Fuge zwischen den Brückenträgern der Querträger als Doppel-T-Profil mit Bohrungen in seinem Steg für die Zapfen angeordnet ist, dass die Flansche des Doppel-T-Profils die Kanten der Brückenträger überragen, dass ein Abschlußprofil die Flansche überdeckt und dass das Abschlußprofil Zapfen aufweist, die durch Bohrungen in den Brückenträger hineinragen, wobei in den Enden der Zapfen eine fluchtende Bohrung zur Aufnahme eines im Brückenträger gelagerten Verriegelungselements vorhanden ist.

3. Kupplung von Brückenträgern mobiler Brücken mit formschlüssiger Verriegelung nach Anspruch 1, **dadurch gekennzeichnet**, dass die Flansche des als Querträger dienenden Doppel-T-Profils Nasen aufweisen, die in Nuten eines Abschlussprofils, das mit den Längsträgern fest verbunden ist, formschlüssig eingreifen.

4. Kupplung nach Anspruch 3, **dadurch gekennzeichnet**, dass in der Nut des Abschlussprofils ein Keil angeordnet ist.
